(19) Europäisches Patentamt
European Patent Office
Office européen des brevets

(11) Veröffentlichungsnummer : **0 044 499**
**B1**

(12) # EUROPÄISCHE PATENTSCHRIFT

(45) Veröffentlichungstag der Patentschrift : **15.05.85**

(51) Int. Cl.[4] : **C 08 K 5/34**, C 07 D401/12

(21) Anmeldenummer : **81105459.2**

(22) Anmeldetag : **13.07.81**

(54) **Triazinylaminotriazine, ihre Herstellung, ihre Verwendung zum Stabilisieren von synthetischen Polymeren sowie die mit ihnen stabilisierten Produkte.**

(30) Priorität : **18.07.80 DE 3027223**

(43) Veröffentlichungstag der Anmeldung : **27.01.82 Patentblatt 82/04**

(45) Bekanntmachung des Hinweises auf die Patenterteilung : **15.05.85 Patentblatt 85/20**

(84) Benannte Vertragsstaaten : **BE CH DE FR GB IT LI NL**

(56) Entgegenhaltungen :
**EP-A- 0 003 542**
**EP-A- 0 014 683**
**EP-A- 0 029 522**
**DE-A- 2 636 130**

(73) Patentinhaber : **HOECHST AKTIENGESELLSCHAFT**
**Postfach 80 03 20**
**D-6230 Frankfurt am Main 80 (DE)**

(72) Erfinder : **Wiezer, Hartmut, Dr.**
**Hans-Fischer-Strasse 6**
**D-8906 Gersthofen (DE)**
Erfinder : **Pfahler, Gerhard, Dr.**
**Karlsbader Strasse 27**
**D-8900 Augsburg (DE)**

**EP 0 044 499 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft polyalkylpiperidingruppenhaltige Triazinylaminotriazine, ein Verfahren zu ihrer Herstellung und ihre Verwendung als Lichtschutzmittel für synthetische Polymere.

Die neuen Verbindungen entsprechen der allgemeinen Formel (I)

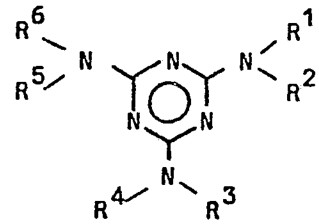

(I)

in welcher die Reste $R^1$, $R^2$, $R^3$, $R^4$, $R^5$ und $R^6$ gleich oder verschieden sind und die Bedeutung von $C_1$- bis $C_{18}$-Alkyl, vorzugsweise $C_1$- bis $C_{12}$-Alkyl und insbesondere $C_1$- bis $C_8$-Alkyl, $C_5$- bis $C_{12}$-Cycloalkyl, $C_7$- bis $C_{14}$-Aralkyl, vorzugsweise $C_7$- bis $C_{14}$-Phenylalkyl, insbesondere $C_7$- bis $C_9$-Phenylalkyl oder einer Gruppe der Formel (II), (III) oder (IV) haben

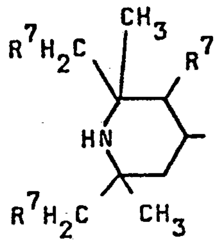

(II)

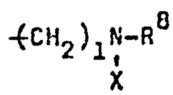

(III)

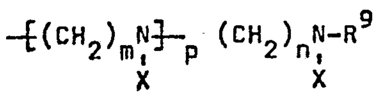

(IV)

jedoch mindestens $R^1$, $R^3$ und $R^5$ für eine Gruppe der Formel (III) oder (IV) stehen, wobei in den Formeln (II), (III) und (IV) bedeutet :

$R^7$ = Wasserstoff oder $C_1$- bis $C_5$-Alkyl, vorzugsweise Wasserstoff oder Methyl und insbesondere Wasserstoff.

$R^8$ und $R^9$ gleiche oder verschiedene Reste, die Wasserstoff, $C_1$- bis $C_{18}$-Alkyl, vorzugsweise $C_1$- bis $C_{12}$-Alkyl und insbesondere $C_1$- bis $C_8$-Alkyl, $C_5$- bis $C_{12}$-Cycloalkyl, $C_7$- bis $C_{14}$-Phenylalkyl, insbesondere $C_7$- bis $C_9$-Phenylalkyl oder eine Gruppe der Formel (II) sein können,

l, m und n gleiche oder unterschiedliche ganze Zahlen von 2 bis 6, vorzugsweise 2 oder 3,

P eine ganze Zahl von 0 bis 3, vorzugsweise 0 oder 1 und insbesondere 0, wobei die Reste $R^1$ bis $R^6$ bei p = 0 bevorzugt Gruppen der Formeln (III) oder (IV) sind.

X bedeutet einen Rest der Formel

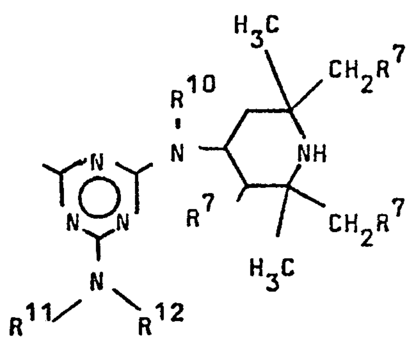

in der

$R^{10}$ und $R^{11}$ für gleiche oder verschiedene, bevorzugt jedoch gleiche Reste stehen, die Wasserstoff, $C_1$- bis $C_{18}$-Alkyl, vorzugsweise $C_1$- bis $C_{12}$-Alkyl, insbesondere $C_1$- bis $C_8$-Alkyl, das durch Hydroxi substituiert sein kann, $C_2$- bis $C_5$-Alkyl, das durch $C_1$- bis $C_{18}$-Alkoxi, vorzugsweise $C_1$- oder $C_2$-Alkoxi oder durch $C_1$- bis $C_4$-Dialkylamino, vorzugsweise $C_1$- oder $C_2$-Dialkylamino substituiert ist, $C_5$- bis $C_{12}$-Cycloalkyl, gegebenenfalls $C_1$- bis $C_{18}$-alkylsubstituiertes Phenyl, $C_7$- bis $C_{14}$-Aralkyl, vorzugsweise $C_7$-

bis $C_{14}$-Phenylalkyl, insbesondere $C_7$- bis $C_9$-Phenylalkyl oder eine Gruppe der Formel (II) sein können, jedoch in Formel (I) mindestens ein Rest $R^{10}$ oder $R^{11}$ eine $C_2$- bis $C_5$-Alkylgruppe, die durch $C_1$- bis $C_4$-Dialkylamino substituiert ist, sein muß, und

$R^{12}$ Wasserstoff, $C_1$- bis $C_{18}$-Alkyl, vorzugsweise $C_1$- bis $C_{12}$-Alkyl, insbesondere $C_1$- bis $C_8$-Alkyl, $C_5$- bis $C_{12}$-Cycloalkyl, $C_7$- bis $C_{14}$-Aralkyl, vorzugsweise $C_7$- bis $C_{14}$-Phenylalkyl, insbesondere $C_7$- bis $C_9$-Phenylalkyl oder bevorzugt eine Gruppe der Formel (II) ist.

Beispiele für die neuen Verbindungen sind :

1. 2,4,6-Tris-{1,9-bis-[2,4-<N-(2,2,6,6-tetramethyl-4-piperidyl)-3-dimethylaminopropylamino>-1,3,5-triazin-6-yl]-1,5,9-triazanonyl-5}-1,3,5-triazin
2. 2,4,6-Tris-{1,9-bis-[2,4-bis-<N-(2,2,6,6-tetramethyl-4-piperidyl)-2-dimethylaminoethylamino>-1,3,5-triazin-6-yl]-1,5,9-triazanonyl-5}-1,3,5-triazin
3. 2,4,6-Tris-{1,9-bis-[2,4-bis-<N-(2,2,6,6-tetramethyl-4-piperidyl)-4-diethylaminobutylamino>-1,3,5-triazin-6-yl]-1,5,9-triazanonyl-5}-1,3,5-triazin
4. 2,4,6-Tris-{1,9-bis-[2-<N-(2,2,6,6-tetramethyl-4-piperidyl)-3-methoxipropylamino>-4-<N-(2,2,6,6-tetramethyl-4-piperidyl)-3-dimethylaminopropylamino>-1,3,5-triazin-6-yl]-1,5,9-triazanonyl-5}-1,3,5-triazin
5. 2,4,6-Tris-{1,7-bis-[2,4-bis-<N-(2,2,6,6-tetramethyl-4-piperidyl)-3-dimethylaminopropylamino>-1,3,5-triazin-6-yl]-1,4,7-triazaheptyl-4}-1,3,5-triazin
6. 2,4,6-Tris-{1,9-bis-[2-dibutylamino-4-<N-(2,2,6,6-tetramethyl-4-piperidyl)-3-methoxipropylamino>-1,3,5-triazin-6-yl]-1,5,9-triazanonyl-5}-1,3,5-triazin
7. 2,4,6-Tris-{1,8-bis-[2-dibutylamino-4-<N-(2,2,6,6-tetramethyl-4-piperidyl)-3-methoxipropylamino>-1,3,5-triazin-6-yl]-1,4,8-triazaoctyl-4}-1,3,5-triazin
8. 2,4,6-Tris-{1,9-bis-[2,4-bis-<N-(2,2,6,6-tetramethyl-4-piperidyl)-3-diethylaminopropylamino>-1,3,5-triazin-6-yl]-1,5,9-triazanonyl-5}-1,3,5-triazin
9. 2,4,6-Tris-{1,7-bis-[2,4-bis-<N-(2,2,6,6-tetramethyl-4-piperidyl)-3-dimethylaminopropylamino>-1,3,5-triazin-6-yl]-1,4,7-triazaheptyl-4}-1,3,5-triazin

Die neuen Stabilisatoren werden aus Cyanurhalogenid, polyalkylpiperidingruppenhaltigen Aminen und Polyaminen erhalten.

Zu ihrer Synthese wird als Verfahrensschritt A zunächst Cyanurhalogenid, bevorzugt Cyanurchlorid, bei 0 bis 10 °C mit der 1,0- bis 1,05-, vorzugsweise der 1,0- bis 1,01fachen molaren Menge eines Amins der Formel (V) zur Reaktion gebracht,

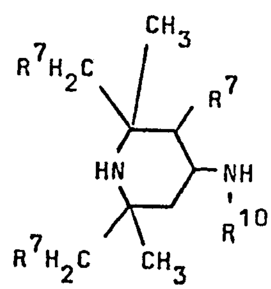

(V)

worauf man als Verfahrensschritt B die hierbei entstandene Verbindung bei 20 bis 50, vorzugsweise 40 bis 50 °C mit der 1,0- bis 1,05-, vorzugsweise 1,0- bis 1,01fachen molaren Menge eines Amins der Formel (VI)

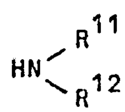

(VI)

umsetzt, wobei das Monohalogendiaminotriazin der Formel (VII)

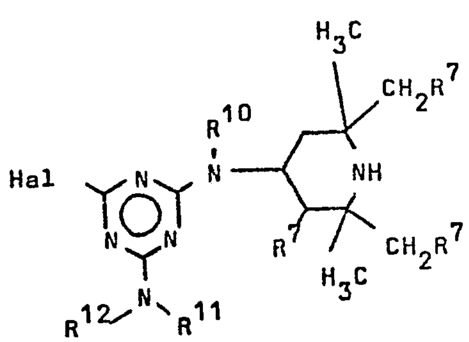

(VII)

entsteht. Man arbeitet jeweils in Anwesenheit eines inerten organischen Lösungsmittels unter Zugabe von, bezogen auf Amin (V) und (VI), äquimolaren Mengen einer anorganischen Base als Halogenwasserstoffakzeptor. Von dieser Zwischenverbindung (VII) werden im Verfahrensschritt C, ebenfalls in einem organischen Lösungsmittel, (p + 2) Mol in Gegenwart äquimolarer Mengen einer anorganischen Base bei 80 bis 180 °C, vorzugsweise 100 bis 150 °C, mit einem Polyamin der Formel (VIII)

$$R^8-\underset{H}{N}(CH_2)_l\underset{H}{N}[(CH_2)_m\underset{H}{N}]_p(CH_2)_n\underset{H}{N}-R^9 \qquad (VIII)$$

unter Substitution von (p + 2) Aminogruppen umgesetzt. Die verbleibende Aminogruppe wird schließlich im Verfahrensschritt D, wiederum in Gegenwart einer anorganischen Base als Halogenwasserstoffakzeptor und eines organischen Lösungsmittels, gegebenenfalls nach Entfernen des Reaktionswassers, mit der äquivalenten Menge eines Cyanurhalogenids, bevorzugt Cyanurchlorid, bei 10 bis 80, vorzugsweise 90 bis 150 °C zu den Verbindungen der Formel (I) derivatisiert.

In den Formeln (IV) bis (VIII) haben die Reste $R^7$, $R^8$, $R^9$, $R^{10}$, $R^{11}$ und $R^{12}$ sowie die Indices l, m, n und p die eingangs angegebenen Bedeutungen.

Die Synthese der erfindungsgemäßen Verbindungen kann mit oder ohne Isolierung der einzelnen Zwischenstufen erfolgen. Zur Gewinnung der Endprodukte wird das ausgefallene Neutralisationshalogenid abfiltriert, worauf man die Reaktionsfiltrate einrotiert. Die Triazinverbindung bleiben als feste Harze oder Wachse zurück.

Die Reaktionen werden in unter den Reaktionsbedingungen inerten organischen Lösungsmitteln, wie z. B. Petrolether, Aceton, Ether, Dioxan, Benzol, Toluol, Xylol, Cumol, Mesithylen, Diethylketon etc. oder Gemischen davon durchgeführt.

Bei allen Reaktionsschritten ist es erforderlich, äquivalente Mengen, bezogen auf sich bildenden Halogenwasserstoff, einer Base, besonders eines Alkalimetallhydroxids in fester Form oder wäßriger Lösung, zuzusetzen oder zuzudosieren. Geeignet sind z. B. Natriumhydroxid, Kaliumhydroxid, Natriumcarbonat und Kaliumcarbonat.

Phasentransferkatalysatoren, besonders diejenigen vom Typ der quaternären Ammoniumsalze in Mengen von 0,01 bis 1 Gew.-%, bezogen auf Endprodukt, beschleunigen die Reaktion.

Amine der Formel (V) sind beispielsweise :

2,2,6,6-Tetramethyl-4-aminopiperidin, 2,2,6,6-Tetramethyl-4-methylamino-piperidin, 2,2,6,6-Tetramethyl-4-butylamino-piperidin, 2,2,6,6-Tetramethyl-4-hexylamino-piperidin, 2,2,6,6-Tetramethyl-4-dodecylamino-piperidin, 2,2,6,6-Tetramethyl-4-octadecylamino-piperidin, 2,2,6,6-Tetramethyl-4-cyclohexylamino-piperidin, 2,2,6,6-Tetramethyl-4-cyclododecylamino-piperidin, N-(2,2,6,6-Tetramethyl-4-piperidyl)-3-hydroxipropylamin, N-(2,2,6,6-Tetramethyl-4-piperidyl)-3-methoxipropylamin, N-(2,2,6,6-Tetramethyl-4-piperidyl)-3-ethoxipropylamin, N-(2,2,6,6-Tetramethyl-4-piperidyl)-3-octadecylpropylamin, N-(2,2,6,6-Tetramethyl-4-piperidyl)-3-dimethylaminopropylamin, N-(2,2,6,6-Tetramethyl-4-piperidyl)-4-diethylaminobutylamin, 2,3,6-Trimethyl-2,6-diethyl-4-aminopiperidin.

Vertreter von Aminen der Formel (VI) sind z. B. :

Methylamin, Ammoniak, Butylamin, Hexylamin, Dodecylamin, Octadecylamin, Dibutylamin, Dioctadecylamin, 3-Methoxipropylamin, Ethanolamin, 1-Amino-2-hydroxi-octadecan, Dicyclohexylamin, 3-Octadecyloxipropylamin, 3-Dimethylaminopropylamin, 3-Diethylaminopropylamin, Anilin, Cumidin, Benzylamin, 4-Amino-1-butanol, Piperidin.

Unter Polyaminen der Formel (VIII) sind z. B. zu verstehen :

Diethylentriamin, 3-(2-Aminoethyl)-aminopropylamin, Dipropylentriamin, Triethylentetramin, N,N'-Bis-(3-aminopropyl)-ethylendiamin, Tetraethylenpentamin.

Aus der Deutschen Offenlegungsschrift 26 36 130 und der Europäischen Offenlegungsschrift 14 683 sind bereits Triazinverbindungen bekannt, in denen alle Aminogruppen von Polyaminen durch Diaminotriazinreste substituiert sind. Für die Synthese der erfindungsgemäßen Verbindungen ist es nun aber erforderlich, eine Teilsubstitution der Polyamine herbeizuführen, denn nur diese teilsubstituierten Zwischenprodukte, die noch NH-Gruppen enthalten, erlauben die Folgereaktion gemäß Verfahrensschritt D. Mit der Bildung solcher teilsubstituierter Produkte war jedoch nicht ohne weiteres zu rechnen, weil die Reaktivitätsunterschiede der einzelnen NH-Gruppen in den Polyaminen nicht groß sind. Es mußte vielmehr erwartet werden, daß sich neben den benötigten, teilsubstituierten Triazinylpolyaminen erhebliche Mengen der vollständig substituierten Verbindungen bilden würden. Daß dies nicht der Fall ist, muß daher als außerordentlich überraschend bezeichnet werden.

Des weiteren war nicht vorherzusehen, daß sich die neuen Triazine problemlos in die zu stabilisierenden Polymeren einarbeiten lassen würden und dann auch die gewünschte Wirksamkeit besitzen, denn aufgrund ihres hohen Verzweigungsgrades, welcher dem von vernetzten Oligomeren

ähnlich ist, mußte man damit rechnen, daß sie wegen mangelnder Verträglichkeit und Wanderungsfähigkeit im Polymergefüge keine oder eine nur sehr schlechte Stabilisatoreignung aufweisen würden. Alle bisher beschriebenen Lichtschutzmittel besitzen nämlich entweder einen ausgesprochen niedrigmolekularen Charakter oder, wenn sie hochmolekular sind, eine kettenförmige Struktur. Es bestand somit ein Vorurteil gegen den Einsatz der hochmolekularen, stark verzweigten Produkte der vorliegenden Erfindung.

Ein weiterer Vorteil der neuen Produkte ist in ihrer niedrigen Flüchtigkeit, die sich insbesondere beim Stabilisieren von Materialien mit großer spezifischer Oberfläche wie z. B. Folien, Fasern, Fäden etc. vorteilhaft auswirkt, zu sehen. Dies fällt besonders im Vergleich zu Beispiel 6 der DE-OS 26 36 144, dem Beispiel, das von den in den DE-OSS 26 36 144 und 26 36 130 beschriebenen Triazinstabilisatoren die beste Wirksamkeit besitzt, auf.

Die neuen Verbindungen sind, wie bereits erwähnt, ganz hervorragend zum Stabilisieren von Kunststoffen gegen deren Schädigung durch die Einwirkung von Sauerstoff, Wärme und Licht geeignet. Beispiele für solche Kunststoffe sind im einzelnen :

Polymere, die sich von einfach oder doppelt ungesättigten Kohlenwasserstoffen ableiten, z. B. Polyolefine wie Polyethylen, das gegebenenfalls vernetzt sein kann, Polypropylen, Polybuten-1, Polyisobuten, Polymethylbuten-1, Polymethylpenten-1, Polyisopren, Polybutadien, Polystyrol, Copolymere der den genannten Homopolymeren zugrundeliegenden Monomeren, wie Ethylen-Propylen-Copolymere, Propylen-Buten-1-Copolymere, Propylen-Isobuten-Copolymere, Styrol, Butadien-Copolymere, sowie Terpolymere von Ethylen und Propylen mit einem Dien, wie z. B. Hexadien, Dicyclopentadien oder Ethylidennorbornen ; Mischungen der obengenannten Homopolymeren, wie beispielsweise Gemische von Polypropylen und Polyethylen, Polypropylen und Polybuten-1, Polypropylen und Polyisobutylen oder von Butadien-Acrylnitril-Copolymerisat mit einem Styrol-Butadien-Copolymerisat.

Halogenhaltige Vinylpolymere, wie Polyvinylchlorid, Polyvinylidenchlorid, Polyvinylfluorid, Polychloropren und Chlorkautschuke, sowie Copolymere von Vinylchlorid und Vinylidenchlorid untereinander und mit anderen olefinisch ungesättigten Monomeren.

Polymere, die sich von α,β-ungesättigten Säuren und deren Derivaten ableiten, wie Polyacrylate und Polymethacrylate, Polyacrylamide und Polyacrylnitril, deren Copolymere untereinander und mit anderen Vinylverbindungen, wie Acrylnitril-Butadien-Styrol-, Acrylnitril-Styrol- und Acrylnitril-Styrol-Acrylester-Copolymerisate, sowie deren Copolymere mit α-Olefinen wie z. B. Ethylen-(Meth)Acrylat-Copolymere.

Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyrat, Polyallylphthalat, Polyallylmelamin und deren Copolymere mit anderen Vinylverbindungen, wie Ethylen-Vinylacetat-Copolymere.

Homo- und Copolymere, die sich von Epoxiden ableiten, wie Polyethylenoxid oder die Polymerisate, die sich von Bisglycidylethern ableiten.

Polyacetale, wie Polyoximethylen und Polyoxiethylen, sowie solche Polyoximethylene, die als Comonomeres Ethylenoxid enthalten.

Polyurethane und Polyharnstoffe

Polycarbonate

Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10, Polyamid 11, Polyamid 12.

Polyester, die sich von Dicarbonsäuren und Dialkoholen und/oder von Hydroxicarbonsäuren oder den entsprechenden Lactonen ableiten, wie Polyethylenterephthalat, Polybutylenterephthalat, Poly-1,4-dimethylol-cyclohexanterephthalat.

Vernetzte Polymerisate, die sich von Aldehyden einerseits und Phenolen, Harnstoffen und Melaminen andererseits ableiten, wie Phenol-Formaldehyd-, Harnstoff-Formaldehyd- und Melamin-Formaldehydharze.

Die neuen Verbindungen lassen sich schließlich auch als Stabilisatoren auf dem Harz- und Lacksektor einsetzen. Beispiele sind duroplastische und thermoplastische Acrylharze, welche für Autolackierungen verwendet werden [Encyclopedia of Polymer Science and Technology, Interscience Publishers, New York, Band 1 (1964), Seiten 273-276 und Band 13 (1970), Seiten 530-532 ; « Understanding Paint » von W. R. Fuller, in American Paint Journal Co., St. Louis, 1965, Seiten 124-135], Acrylharzlacke, das sind die üblichen Einbrennlacke [beschrieben z. B. in H. Kittel's « Lehrbuch der Lacke und Beschichtungen », Band 1, Teil 2, Seite 735 und 742 (Berlin, 1972), und in H. Wagner, H. F. Sarx « Lackkunstharze », Seiten 229-235] sowie ganz besonders Mischungen auf der Basis von heißvernetzbarem Acrylharz und Styrol sowie Lacke und Beschichtungen auf der Basis von Acryl/Melaminharz und Alkyd/Acryl/Melaminharz. Derartige Lacke können als weitere Zusatzstoffe andere übliche Lichtschutzmittel, phenolische Antioxidantien, Pigmente, Farbstoffe, Metalldesaktivatoren etc. enthalten.

Von besonderer Bedeutung ist die Stabilisierung von Polyolefinen, Styrolpolymerisaten, Polyamiden, Poly-(meth)acrylaten und von Polyurethanen, für die sich die Verbindungen bevorzugt eignen. Beispiele hierfür sind Polyethylen hoher und niedriger Dichte, Polypropylen, Ethylen-Propylen-Copolymerisate, Polystyrol, Styrol-Butadien-Acrylnitril-Terpolymerisate ; Mischungen von Polyolefinen oder von Styrolpolymerisaten sowie Polyurethane auf Polyether- oder Polyesterbasis.

Die neuen Stabilisatoren werden nach allgemein üblichen Methoden in die Polymermassen eingearbeitet. Die Einarbeitung kann beispeilsweise durch Einmischen der Verbindungen und gegebenenfalls weiterer Additive in die Schmelze nach den in der Technik üblichen Methoden, vor oder während der Formgebung, oder auch durch Aufbringen der gelösten oder dispergierten Verbindungen auf das Polymere direkt oder Einmischen in eine Lösung, Suspension oder Emulsion desselben, gegebenenfalls unter nachträglichem Verdunstenlassen des Lösungsmittels, erfolgen. Die Mengen liegen bei 0,01 bis 5, vorzugsweise bie 0,05 bis 2,5 und insbesondere bei 0,1 bis 1,0 Gew.-%, bezogen auf das zu stabilisierende Material. Die neuen Verbindungen können auch in Form eines Masterbatches, diese Verbindungen beispielsweise in einer Konzentration von 2,5 bis 50, vorzugsweise 5,0 bis 20 Gew.-% enthält, den zu stabilisierenden Kunststoffen zugesetzt werden.

Die durch den Zusatz der erfindungsgemäßen Substanzen stabilisierten Kunststoffe können gegebenenfalls noch andere bekannte und übliche Zusätze, wie beispielsweise Antioxidantien auf Phenol- und Sulfidbasis, UV-Absorber und Lichtschutzmittel, Phosphitstabilisatoren, Metallverbindungen, Epoxistabilisatoren und mehrwertige Alkohole enthalten.

Beispiele für Antioxidantien sind solche vom Typ der sterisch gehinderten Phenole wie 4,4'-Butyliden-bis-(2,6-di-tert.-butyl-phenol), Ester der β-(3,5-Di-tert.-butyl-4-hydroxiphenyl)-propionsäure mit ein- oder mehrwertigen Alkoholen oder Thioalkoholen, Ethylenglykol-bis-[3,3-bis-(3'-tert.-butyl-4'-hydroxiphenyl)-butyrat, 1,1,3-Tris-(5-tert.-butyl-4-hydroxi-2-methylphenyl)-butan, 1,3,5-Tris-(3,5-di-tert.-butyl-4-hydroxibenzyl)-2,4,6-trimethylbenzol, Ca oder Ni-Salze des 3,5-Di-tert.-butyl-4-hydroxibenzylphosphonsäuremonoethylesters, phenolische Triazinverbindungen, Thiodipropionsäureester von Fettalkoholen, Dioctadecylsulfid und- disulfid.

Zu den UV-Absorbern und Lichtschutzmitteln gehören z. B. 2-(2'-Hydroxiphenyl)-benztriazole wie 2-(2'-Hydroxi-5'-methylphenyl)-benztriazol, 2-Hydroxibenzophenone wie 2-Hydroxi-4-octoxi-benzophenon, Stabilisatoren aus der Gruppe der Salizylate wie Octylphenylsalizylat, Nickelchelate, Oxalsäurediamide und sterisch gehinderte Piperidinverbindungen.

Als Phosphite sind Trisnonylphenylphosphit, Trislaurylphosphit oder auch Ester des Pentaerythritphosphits zu nennen.

Unter als Stabilisatoren bekannten Metallverbindungen werden in diesem Zusammenhang verstanden : Calcium-, Barium-, Strontium-, Zink-, Cadmium-, Magnesium-, Aluminium- und Bleiseifen aliphatischer Carbonsäuren oder Oxicarbonsäuren mit etwa 12 bis 32 C-Atomen, Salze der genannten Metalle mit aromatischen Carbonsäuren wie Benzoate oder Salizylate sowie (Alkyl-)Phenolate dieser Metalle, ferner Organozinnverbindungen, wie z. B. Dialkylzinnthioglykolate und -carboxilate.

Bekannte Epoxistabilisatoren sind z. B. epoxidierte höhere Fettsäuren wie epoxidiertes Sojabohnenöl, Tallöl, Leinöl oder epoxidiertes Butyloleat sowie Epoxide langkettiger Olefine.

Mehrwertige Alkohole können beispielsweise Pentaerythrit, Trimethylolpropan, Sorbit oder Mannit sein, d. h. bevorzugt Alkohole mit 5 oder 6 C-Atomen und 2 bis 6 OH-Gruppen.

Eine wirksame Stabilisatorkombination für Poly-α-Olefine, wie z. B. Hoch-, Mittel- und Niederdruckpolymerisate von $C_2$- bis $C_4$-α-Olefinen, insbesonders Polyethylen und Polypropylen oder von Copolymerisaten derartiger α-Olefine besteht, bezogen auf 100 Gewichtsteile Polymer, beispielsweise aus 0,01 bis 5 Gewichtsteilen einer der erfindungsgemäß zu verwendenden Verbindungen, 0,05 bis 5 Gewichtsteilen eines phenolischen Stabilisators, gegebenenfalls 0,01 bis 5 Gewichtsteilen eines schwefelhaltigen Costabilisators sowie gegebenenfalls 0,01 bis 3 Gewichtsteilen einer basischen oder neutralen Metallseife, wie z. B. Calciumstearat oder Zinkstearat sowie gegebenenfalls 0,1 bis 5 Gewichtsteile eines Phosphits und gegebenenfalls 0,01 bis 5 Gewichtsteile eines bekannten UV-Stabilisators aus der Gruppe der Alkoxihydroxibenzophenone, 4-Hydroxiphenylbenzotriazole, Benzylidenmalonsäuremononitrilester oder der sog. Quencher, wie z. B. Nickelchelate.

Die erfindungsgemäß stabilisierten Kunststoffe können in verschiedenster Form angewendet werden, z. B. als Folien, Fasern, Bändchen, Profile oder als Bindemittel für Lacke, Klebemittel oder Kitte.

Die folgenden Beispiele dienen der weiteren Erläuterung der Erfindung. Die Hinweise auf die einzelnen Verbindungen beziehen sich auf die Aufstellung in der Beschreibung, Seiten 3 bis 4.

Beispiel 1 (Verbindung Nr. 4)

In einer 500 ml-Rührapparatur werden 29,0 g (0,05 Mol) 2-[N-(2,2,6,6-Tetramethyl-4-piperidyl-3-methoxipropylamino]-4-[N-(2,2,6,6-tetramethyl-4-piperidyl)-3-dimethyl-aminopropylamino]-6-chlor-1,3,5-triazin, 150 ml Xylol, 3,3 g (0,025 Mol) Dipropylentriamin und 2 g (0,5 Mol) NaOH-Pulver 20 h unter Rückfluß gekocht. Dann wird das Reaktionswasser am Wasserabscheider abgetrennt, auf 20 °C gekühlt, 1,5 g (0,008 Mol) Cyanurchlorid und 1 g (0,025 Mol) NaOH-Pulver zugefügt und weitere 20 h bei 130 °C gerührt. Anschließend wird heiß filtriert, das Filtrat bis zur Trockene eingeengt und der Rückstand bei 150 °C im Vakuum getrocknet. Farbloses Harz, Fp. 83 °C.

Beispiele 2 und 3

Es wurde analog Beispiel 1, jedoch unter Verwendung der in der folgenden Tabelle angegebenen Ausgangsmaterialien gearbeitet.

| Bsp. Nr. | Verfahrensprodukt (Verb. Nr. ...) | Ausgangsmaterial | | Fp (°C) |
|---|---|---|---|---|
| | | 6-Chlortriazin | Polyamin | |
| 2 | 6 | 2-Dibutylamino-4-< N-(2,2,6,6-tetramethyl-4-piperidyl)-3-methoxypropylamino >-6-chlor-1,3,5-triazin (23,5 g ≙ 0,05 Mol) | analog Bsp. 1 | Harz |
| 3 | 7 | analog Bsp. 2 | 3-(2-Aminoethyl)-amino-propylamin (2,95 g ≙ 0,025 Mol) | 86 |

Beispiel 4 (Verbindung Nr. 8) (Eintopfverfahren)

Zu 9,2 g (0,05 Mol) Cyanurchlorid in 80 ml Xylol tropft man 26,9 g (0,1 Mol) N-(2,2,6,6-Tetramethyl-4-piperidyl)-3-diethyl-amino-propylamin, gelöst in 70 ml Xylol bei ca. 20 °C. Nach dem Erwärmen auf 40 °C werden 4 g (0,1 Mol) NaOH-Pulver zugefügt, worauf man 4 Stunden bei derselben Temperatur rührt. Dann gibt man 3,3 g (0,025 Mol) Dipropylentriamin und 2 g (0,05 Mol) NaOH-Pulver zu und hält 16 Stunden bei ca. 130 °C. Anschließend wird das Reaktionswasser azeotrop abdestilliert, worauf man bei 40 °C 1,54 g (0,013 Mol) Cyanurchlorid und weitere 2 g (0,05 Mol) NaOH-Pulver zufügt und 16 Stunden bei 130 °C rührt. Nach der Aufarbeitung analog Beispiel 1 wird ein harzartiges Produkt erhalten.

Beispiele 5 und 6

Es wurde analog Beispiel 4 gearbeitet unter Einsatz anderer Monoamine.

| Bsp. Nr. | Verfahrensprodukt (Verb. Nr. ...) | Ausgangsmaterial | | Fp (°C) |
|---|---|---|---|---|
| | | Piperidylamin | Polyamin | |
| 5 | 1 | N-(2,2,6,6-Tetramethyl-4-piperidyl)-3-dimethyl-aminopropylamin (24,1 g ≙ 0,1 Mol) | analog Bsp. 1 | 87 |
| 6 | 9 | analog Bsp. 5 | Diethylentriamin (2,6 g ≙ 0,025 Mol) | 125 |

**Patentansprüche**

1. Triazinylaminotriazine der allgemeinen Formel (I)

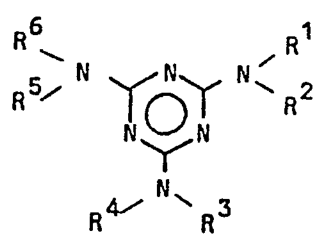

(I)

in welcher die Reste $R^1$, $R^2$, $R^3$, $R^4$, $R^5$ und $R^6$ gleich oder verschieden sind und die Bedeutung von $C_1$- bis $C_{18}$-Alkyl, $C_5$- bis $C_{12}$-Cycloalkyl, $C_7$- bis $C_{14}$-Aralkyl oder eine Gruppe der Formeln (II), (III) oder (IV) haben,

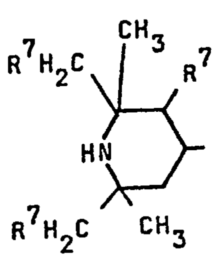

(II)

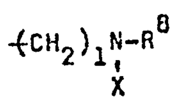

(III)

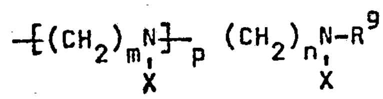

(IV)

jedoch mindestens $R^1$, $R^3$ und $R^5$ für eine Gruppe der Formel (III) oder (IV) stehen, wobei in den Formeln (II), (III) und (IV) bedeutet:

$R^7$ = Wasserstoff oder $C_1$- bis $C_5$-Alkyl,

$R^8$ und $R^9$ gleiche oder verschiedene Reste, die Wasserstoff, $C_1$- bis $C_{18}$-Alkyl, $C_5$- bis $C_{12}$-Cycloalkyl, $C_7$- bis $C_{14}$-Aralkyl oder eine Gruppe der Formel (II) sein können,

l, m und n gleiche oder unterschiedliche ganze Zahlen von 2 bis 6,

P eine ganze Zahl von 0 bis 3, und

X einen Rest der Formel

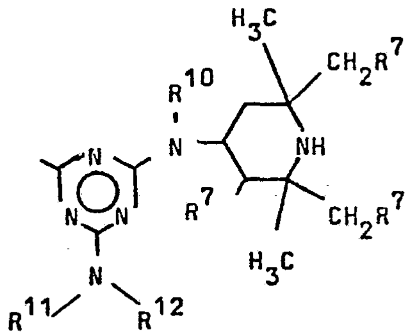

in der

$R^{10}$ und $R^{11}$ für gleiche oder verschiedene Reste stehen, die Wasserstoff, $C_1$- bis $C_{18}$-Alkyl, das durch Hydroxi, $C_1$- bis $C_{18}$-Alkoxi oder $C_1$- bis $C_4$-Dialkylamino substituiert sein kann, $C_5$- bis $C_{12}$-Cycloalkyl, Phenyl, das durch $C_1$- bis $C_{18}$-Alkyl substituiert sein kann, $C_7$- bis $C_{14}$-Aralkyl oder eine Gruppe der Formel (II) sein können, jedoch in Formel (I) mindestens ein Rest $R^{10}$ oder $R^{11}$ eine $C_2$- bis $C_5$-Alkylgruppe, die durch $C_1$- bis $C_4$-Dialkylamino substituiert ist sein muß, und

$R^{12}$ Wasserstoff, $C_1$- bis $C_{18}$-Alkyl, $C_5$- bis $C_{12}$-Cycloalkyl, $C_7$- bis $C_{14}$-Aralkyl oder eine Gruppe der Formel (II) ist.

2. Verfahren zur Herstellung der Triazinylaminotriazine nach Anspruch 1, dadurch gekennzeichnet, daß man

A. 1 Mol Cyanurhalogenid bei 0 bis 10 °C mit 1,0 bis 1,05 Mol eines Amins der Formel (V)

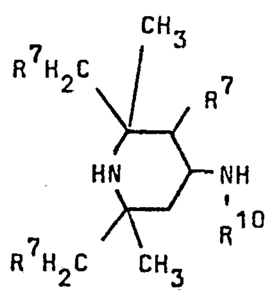

(V)

und hierauf

B. die nach A erhaltene Verbindung bei 20 bis 50 °C mit 1,0 bis 1,05 Mol eines Amins der Formel (VI)

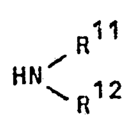

(VI)

jeweils in Gegenwart äquivalenter Mengen einer anorganischen Base und in Anwesenheit eines organischen Lösungsmittels zu einer Verbindung der Formel (VII)

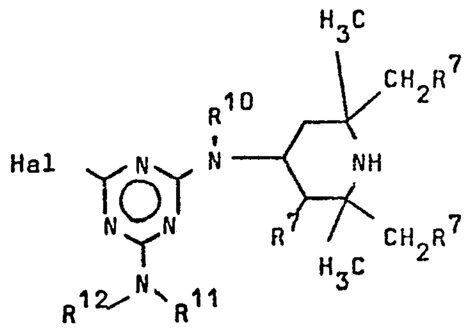

(VII)

umsetzt, von dieser

C. (p + 2) Mol mit 1 Mol eines Polyamins der Formel (VIII)

$$R^8-\underset{H}{N}(CH_2)_l\underset{H}{N}[(CH_2)_m\underset{H}{N}]_p(CH_2)_n\underset{H}{N}-R^9 \quad (VIII)$$

bei 80 bis 180 °C in Gegenwart äquivalenter Mengen einer anorganischen Base und eines organischen Lösungsmittels zur Reaktion bringt, und schließlich

D. das nach C erhaltene Reaktionsprodukt mit der, bezogen auf verbliebene Aminogruppen, äquivalenten Menge Cyanurhalogenid bei 10 bis 180 °C, ebenfalls in einem organischen Lösungsmittel und in Gegenwart einer anorganischen Base abreagieren läßt,

wobei die in den Formeln verwendeten Indices $R^7$ bis $R^{12}$, l, m, n und p die in Anspruch 1 angegebenen Bedeutung haben und Hal für Halogen, insbesondere für Chlor, steht.

3. Verfahren nach Anspruch 2, dadurch gekennzeichnet, daß man die Reaktionsschritte A bis D nach einem sogenannten « Eintopfverfahren » ohne Isolierung der Zwischenstufen durchführt.

4. Verfahren nach den Ansprüchen 2 und 3, dadurch gekennzeichnet, daß bei allen Verfahrensschritten ein Phasentransferkatalysator in Mengen von 0,01 bis 1 Gew.-%, bezogen auf Endprodukt, anwesend ist.

5. Verwendung der Polymeren nach Anspruch 1 zum Stabilisieren von synthetischen Polymeren.

6. Verwendung nach Anspruch 5, dadurch gekennzeichnet, daß die Polymeren Polyolefine sind.

7. Verwendung nach Anspruch 5, dadurch gekennzeichnet, daß die Polymeren halogenhaltige Polymere, Polyacrylate oder Polymethacrylate oder Homo- oder Copolymere des Styrols sind.

8. Verfahren zum Stabilisieren von synthetischen Polymeren gegen den schädigenden Einfluß von Licht, dadurch gekennzeichnet, daß man den Polymeren, gegebenenfalls neben bekannten, stabilisierend wirkenden Stoffen, 0,01 bis 5 Gewichtsteile, bezogen auf Polymeres, eines Stabilisators nach Anspruch 1 zusetzt.

9. Gegen UV-Zersetzung stabilisierte, synthetische Polymere, in denen 0,01 bis 5 Gewichtsteile, bezogen auf Polymeres, eines Stabilisators nach Anspruch 1 enthalten sind.

**Claims**

1. Triazinylaminotriazines of the general formula (I)

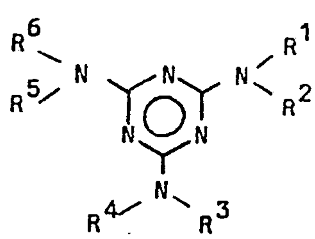

(I)

in which the radicals $R^1$, $R^2$, $R^3$, $R^4$, $R^5$ und $R^6$ are identical or different and denote $C_1$- to $C_{18}$-alkyl, $C_5$- to $C_{12}$-cycloalkyl, $C_7$- to $C_{14}$-aralkyl or a group of the formula (II), (III) or (IV)

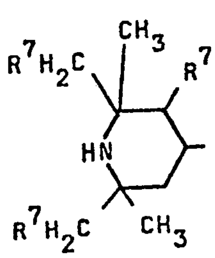

(II)

$$-(CH_2)_l\underset{X}{N}-R^8 \quad (III)$$

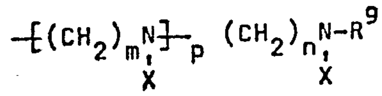

(IV)

but at least the radicals $R^1$, $R^3$ and $R^5$ represent a group of the formula (III) or (IV), and, in the formulae (II), (III) and (IV), $R^7$ denotes hydrogen or $C_1$- to $C_5$-alkyl, $R^8$ and $R^9$ denote identical or different radicals, which can be hydrogen, $C_1$- to $C_{18}$-alkyl, $C_5$- to $C_{12}$-cycloalkyl, $C_7$- to $C_{14}$-aralkyl or a group of the formula (II), l, m and n denote identical or different integers from 2 to 6, p denotes an integer from 0 to 3 and X denotes a radical of the formula

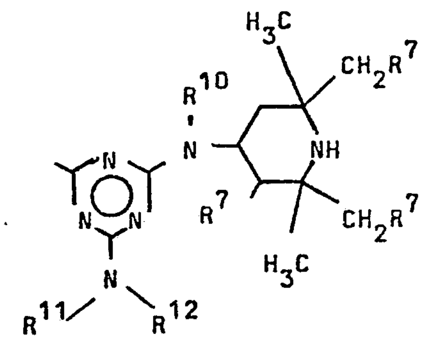

in which $R^{10}$ and $R^{11}$ represent identical or different radicals which can be hydrogen, $C_1$- to $C_{18}$-alkyl, which can be substituted by hydroxyl, $C_1$- to $C_{18}$-alkoxy or $C_1$- to $C_4$-dialkylamino, $C_5$- to $C_{12}$-cycloalkyl, phenyl, which can be substituted by $C_1$- to $C_{18}$-alkyl, $C_7$- to $C_{14}$-aralkyl or a group of the formula (II), but, in formula (I), at least one radical $R^{10}$ or $R^{11}$ must be a $C_2$- to $C_5$-alkyl group which is substituted by $C_1$- to $C_4$-dialkylamino, and $R^{12}$ is hydrogen, $C_1$- to $C_{18}$-alkyl, $C_5$- to $C_{12}$-cycloalkyl, $C_7$- to $C_{14}$-aralkyl or a group of the formula (II).

2. A process for the preparation of the triazinylaminotriazines as claimed in claim 1, which comprises

A. reacting 1 mole of a cyanuric halide with 1.0 to 1.05 moles of an amine of the formula (V)

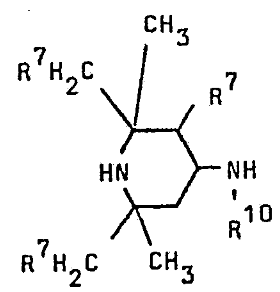

(V)

at 0 to 10 °C, and then

B. reacting the compound obtained according to A with 1.0 to 1.05 moles of an amine of the formula (VI)

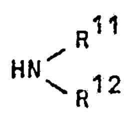

(VI)

at 20 to 50 °C, each reaction being carried out in the presence of equivalent amounts of an inorganic base and in the presence of an organic solvent, to give a compound of the formula (VII)

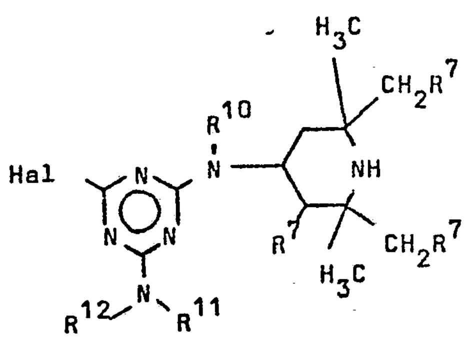

(VII)

C. reacting (p + 2) moles of this compound with 1 mole of a polyamine of the formula (VIII)

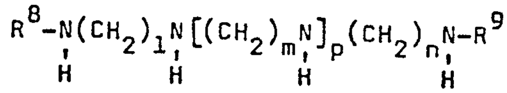

(VIII)

at 80 to 180 °C in the presence of equivalent amounts of an inorganic base and of an organic solvent, and finally

D. allowing the reaction product obtained according to C to react with the equivalent amount, relative to the remaining amino groups, of a cyanuric halide at 10 to 180 °C likewise in an organic solvent and in the presence of an inorganic base, the indices $R^7$ to $R^{12}$, l, m, n and p used in the formulae having the meaning given in claim 1 and Hal representing halogen, in particular chlorine.

3. A process as claimed in claim 2, wherein the reaction steps A to D are carried out by a so-called « one-pot process » without isolation of the intermediate stages.

4. A process as claimed in either of claims 2 or 3, wherein a phase transfer catalyst is present in all the process steps in amounts of 0.01 to 1 % by weight, relative to the end product.

5. Use of the polymers as claimed in claim 1 for stabilizing synthetic polymers.

6. Use as claimed in claim 5, wherein the polymers are polyolefins.

7. Use as claimed in claim 5, wherein the polymers are halogen-containing polymers, polyacrylates or polymethacrylates or homopolymers or copolymers of styrene.

8. A process for stabilizing synthetic polymers against the harmful effect of light, which comprises adding 0.01 to 5 parts by weight, relative to the polymer, of a stabilizer as claimed in claim 1, to the polymers, if appropriate in additon to known, stabilizing substances.

9. Synthetic polymers which have been stabilized against decomposition by UV light and which contain 0.01 to 5 parts by weight, relative to the polymer, of a stabilizer as claimed in claim 1.

**Revendications**

1. Triazinylamino-triazines répondant à la formule générale I

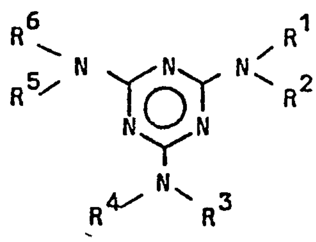

(I)

dans laquelle $R^1$, $R^2$, $R^3$, $R^4$, $R^5$ et $R^6$, qui peuvent être identiques ou différents les uns des autres, représentent chacun un radical alkyle en $C_1$-$C_{18}$, un radical cycloalkyle en $C_5$-$C_{12}$, un radical aralkyle en $C_7$-$C_{14}$ ou un radical répondant à l'une des formules II, III et IV

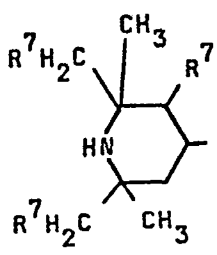

(II)

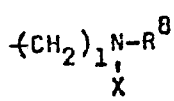

(III)

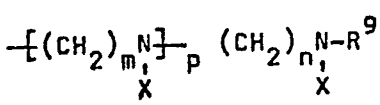

(IV)

au moins l'un des symboles $R^1$, $R^3$ et $R^5$ représentant un radical de formule III ou IV, les divers symboles présents dans les formules II, III et IV ayant les significations suivantes :

$R^7$ représente l'hydrogène ou un alkyle en $C_1$-$C_5$,

$R^8$ et $R^9$ représentent chacun, indépendamment l'un de l'autre, l'hydrogène, un alkyle en $C_1$-$C_{18}$, un cycloalkyle en $C_5$-$C_{12}$, un aralkyle en $C_7$-$C_{14}$ ou un radical de formule II,

l, m et n représentent chacun, indépendamment les uns des autres, un nombre entier de 2 à 6,

p représente un nombre entier de 0 à 3, et

X représente un radical répondant à la formule suivante :

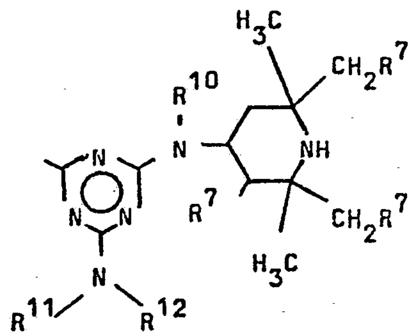

dans laquelle

$R^{10}$ et $R^{11}$ représentent chacun, indépendamment l'un de l'autre, l'hydrogène, un alkyle en $C_1$-$C_{18}$, éventuellement porteur d'un hydroxy, d'un alcoxy en $C_1$-$C_{18}$ ou d'un dialkylamino dont chaque alkyle contient de 1 à 4 atomes de carbone, un cycloalkyle en $C_5$-$C_{12}$, un phényle éventuellement porteur d'un alkyle en $C_1$-$C_{18}$, un aralkyle en $C_7$-$C_{14}$ ou un radical de formule II, avec cette restriction toutefois que, dans la formule I, au moins l'un des symboles $R^{10}$ et $R^{11}$ représente un radical alkyle en $C_2$-$C_5$ porteur d'un dialkylamino dont chacun des alkyles contient de 1 à 4 atomes de carbone, et

$R^{12}$ représente l'hydrogène, un alkyle en $C_1$-$C_{18}$, un cycloalkyle en $C_5$-$C_{12}$, un aralkyle en $C_7$-$C_{14}$ ou un radical de formule II.

2. Procédé de préparation de triazinylamino-triazines selon la revendication 1, procédé caractérisé en ce que :

A. on fait réagir 1 mol d'un halogénure de cyanuryle, à une température de 0 à 10 °C, avec de 1,0 à 1,05 mol d'une amine de formule V

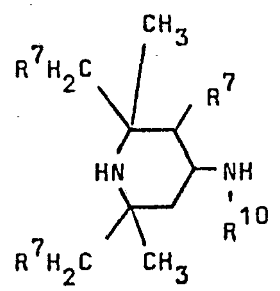

(V)

puis

B. on fait réagir le composé obtenu selon A, à une température de 20 à 50 °C, avec de 1,0 à 1,05 mol d'une amine de formule VI

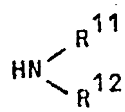

(VI)

à chaque fois en présence de quantités équivalentes d'une base minérale et en présence d'un solvant organique, de manière à obtenir un composé répondant à la formule VII

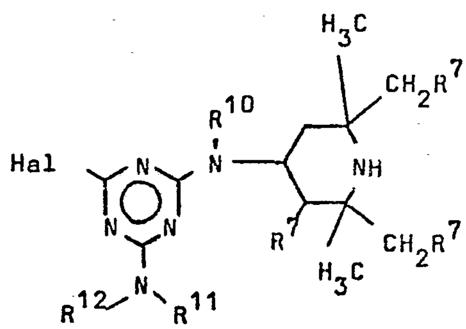

(VII)

C. on fait réagir (p + 2) mol de ce composé (VII) avec 1 mol d'une polyamine de formule VIII

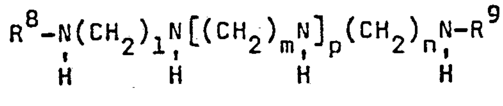

(VIII)

à une température de 80 à 180 °C, en présence de quantités équivalentes d'une base minérale et d'un solvant organique, et enfin,

D. on fait réagir le produit réactionnel obtenu selon C avec la quantité équivalente d'un halogénure de cyanuryle, relativement aux radicaux amino qui restent, à une température de 10 à 180 °C, également dans un solvant organique et en présence d'une base minérale, les symboles et indices $R^7$ à $R^{12}$, l, m, n et p présents dans les formules précédentes ayant les significations qui ont été données à la revendication 1, et Hal représentant un halogène, plus particulièrement le chlore.

3. Procédé selon la revendication 2 caractérisé en ce qu'on effectue les étapes réactionnelles A à D par un mode opératoire dit « en un seul pot », sans isoler les corps intermédiaires.

4. Procédé selon l'une quelconque des revendications 2 et 3 caractérisé en ce que toutes les étapes opératoires sont effectuées en présence d'un catalyseur à transfert de phase, utilisé en des quantités de 0,01 à 1 % en poids par rapport au produit final.

5. Application des composés selon la revendication 1 à la stabilisation de polymères synthétiques.

6. Application selon la revendication 5 caractérisée en ce que les polymères sont des polyoléfines.

7. Application selon la revendication 5 caractérisée en ce que les polymères sont des polymères halogénés, des polyacrylates ou des polyméthacrylates ou encore des homopolymères ou copolymères du styrène.

8. Procédé pour stabiliser des polymères synthétiques contre l'action destructrice de la lumière, procédé caractérisé en ce qu'on ajoute aux polymères, éventuellement en plus de substances à effet stabilisant connues, de 0,01 à 5 % en poids, par rapport au polymère, d'un stabilisant selon la revendication 1.

9. Polymères synthétiques stabilisés contre la dégradation par les rayons ultraviolets, polymères qui contiennent de 0,01 à 5 % en poids, par rapport au polymèmre, d'un stabilisant selon la revendication 1.